# EUROPÄISCHE PATENTSCHRIFT

(11) **EP 0 612 549 B1**
(45) Veröffentlichungstag und Bekanntmachung des Hinweises auf die Patenterteilung: **08.05.1996**
(21) Anmeldenummer: 94100698.3
(22) Anmeldetag: 19.01.1994
(51) Int. Cl.: B01D 27/08

(54) **Ölfilter für die Reinigung von Schmieröl**
Oil filter for purifying lubricating oil
Filtre à huile pour la purification d'huile de graissage

(30) Priorität: 09.02.1993 DE 4303695
(43) Veröffentlichungstag der Anmeldung: 31.08.1994
(73) Patentinhaber: KNECHT FILTERWERKE GMBH, D-70376 Stuttgart (DE)
(72) Erfinder: Brieden, Thomas, D-71336 Waiblingen (DE); Möhle, Rolf, D-74626 Bretzfeld (DE); Müller, Hubert, D-70327 Stuttgart (DE); Sonntag, Dietmar, D-71686 Remseck (DE)
(74) Vertreter: Patentanwalts-Partnerschaft Rotermund + Pfusch

(56) Entgegenhaltungen:
- EP-A- 0 314 915
- WO-A-92/17262
- DE-B- 2 553 293
- US-A- 3 793 803

## Beschreibung

Die Erfindung bezieht sich auf einen Ölfilter für die Reinigung von Schmieröl, insbesondere für Verbrennungsmotoren von Kraftfahrzeugen, mit einem im Einbauzustand zumindest annähernd stehend angeordneten Filtergehäuse mit einem mit diesem verschraubbaren Deckel und einem mit letzterem lösbar verbindbaren, ringförmigen Filtereinsatz, wobei in dem Filtergehäuse ein Öleinlaß für verunreinigtes Öl zu dem den Filtereinsatz umgebenden Zuströmraum und ein Ölauslaß für gereinigtes Öl aus dem von dem Innenraum des Filtereinsatzes gebildeten Abströmraum vorgesehen sind und wobei ferner im unteren Bereich des Filtergehäuses ein mit einem Ölsammelraum verbundener Ableitungskanal für bei einem Wechsel des Filterereinsatzes in dem Filtergehäuse verbliebenes Öl vorgesehen ist, der durch ein ventilartig wirkendes Glied bei jedem Wechsel des Filtereinsatzes selbsttätig geöffnet wird, im übrigen aber ständig abgeschlossen ist.

Bei einem bekannten Ölfilter dieser Art ( EP-PS 0314915 ) ist das ventilartige Glied dezentral im Filtergehäuse angeordnet und steht dort unter der Wirkung entgegengesetzt zueinander wirkender Druckfedern, von denen die eine, die das ventilartig wirkende Glied in Schließrichtung beaufschlagt, an dem Filtereinsatz abgestützt ist.

Beim Ausbau des Filtereinsatzes verschwindet die in Schließrichtung wirkende Kraft dieser einen Druckfeder, so daß die entgegengesetzt in Öffnungsrichtung wirkende andere Druckfeder das ventilartige Glied in Öffnungsrichtung betätigen und damit die Öffnung zum Ableitungskanal freigeben kann. Da die eine Druckfeder hierbei unsymmetrisch an dem Filtereinsatz angreift, wird dieser nachteiligerweise unsymmetrischen beansprucht. Außerdem ist bei dieser Konstruktion der Filtereinsatz nur mühevoll von dem Deckel zu lösen.

Ziel der Erfindung ist es, eine bessere Konstruktion für einem Ölfilter für die Reinigung von Schmieröl anzugeben, bei dem im Filtergehäuse verbliebenes Öl bei jedem Wechsel des Filtereinsatzes selbsttätig abgeleitet wird.

Dies wird bei einem Ölfilter der eingangs genannten Art dadurch erreicht, daß mit dem Deckel eine Mittelstange begrenzt axial verschiebbar verbunden ist, die in ihrem deckelnahen Bereich eine kolbenartige, gegenüber dem Filtereinsatz abgedichtete Verdickung aufweist, die den Zuströmraum von dem Abströmraum trennet, und die in ihrem unteren End-bereich das ventilartig wirkende Glied aufweist, das mit dem Ableitungskanal zusammenwirkt. Dabei kann der Deckel gegenüber der Mittelstange verdrehbar sein.

Damit ergibt sich ein symmetrischer Aufbau des Ölfilters, bei dem allein durch die zum Wechsel des Filtereinsatzes erforderliche, axiale Bewegung der Mittelstange der Ableitungskanal geöffnet wird. Während des Betriebes des Ölfilters wird dagegen die Mittelstange mit dem im unteren Endbereich angebrachten, ventilartig wirkenden Glied ständig nach unten in dessen Schließstellung gedrückt, und zwar dadurch, daß auf die kolbenartige Verdickung von oben der höhere Druck im Zuströmraum, von unten aber nur der geringere Druck im Abströmraum wirkt.

Bei dem Ölfilter nach der Erfindung kann die begrenzte, axiale Verschiebbarkeit der Mittelstange gegenüber dem Deckel durch ineinander eingreifende Rastungen an diesen beiden Teilen und einen an einem dieser beiden Teile vorgesehenen, gegen den anderen dieser beiden Teile gerichteten Hubbegrenzer verwirklicht sein. Hierdurch wird außer einer festen Verbindung zwischen Deckel und Mittelstange die Möglichkeit geschaffen, ein axiales Spiel zwischen diesen beiden Teilen vorzusehen, das zum Ausgleich unterschiedlicher Wärmedehnungen und von Fertigungstoleranzen der Teile erforderlich ist. Das axiale Spiel der Mittelstange ist in Richtung vom Deckel des Ölfilters ferner dadurch begrenzt, daß das ventilartig wirkende Glied bei Geschlossenem Ölfilter sicher abdichtet.

Ferner kann bei dem Ölfilter nach der Erfindung zwischen dem Deckel und der Mittelstange mindestens eine Druckfeder vorgesehen sein. Diese Druckfeder unterstützt einerseits beim Betrieb des Ölfilters das Halten des ventilartigen Gliedes in der Schließstellung. Andererseits ermöglicht diese Druckfeder bei aus dem Filtergehäuse ausgebauter Baugruppe aus Deckel, Mittelstange und Filtereinsatz bei unten abgestütztem unteren Ende der Mittelstange ein Lösen ( Abschieben ) des Filtereinsatzes von der kolbenartigen Verdickung durch Druck von oben auf den Deckel, wobei die Druckfeder zusammengedrückt wird. Vorteilhafterweise kann hierfür eine Druckfeder koaxial zu der Mittelstange im Bereich der Verdickung den Hubbegrenzer umschließend und von den Rastungen umschlossen angeordnet sein.

Die richtige Lage des Filtereinsatzes kann dadurch besser gewährleistet werden, daß dieser an seinem Innenumfang mit einem Stützring versehen ist, der sich an einem inneren, zylindrischen Stützkörper abstützt, der im unteren Teil des Filtergehäuses durch eine Schnappverbindung befestigt ist.

Um eine preisgünstige Herstellbarkeit und ein geringes Gewicht des Ölfilters zu erreichen, kann das Filtergehäuse als Aluminium-Gußteil, der Deckel als Kunststoff-Spritzteil und die Mittelstange mit Verdickung und ventilartigem Glied als Kunststoff-Formteil ausgebildet sein.

Bekannt ist auch ein stehendes Ölfilter nach der DE-A-41 31 353. Dieses Filter ist ein kombiniertes Haupt- und Nebenstromfilter. Der Nebenstromfilterteil wird von einem Gehäuse gebildet, das an eine Mittelstange angeformt ist, die drehbar mit einem Schraubdeckel verbunden ist. Dieses Gehäuse ist teilbar, um ein austauschbares Filterelement dort einsetzen zu können. Die Mittelstange hat zwei Funktionen. Die eine deckt sich mit derjenigen nach der Erfindung und besteht darin, im unteren Bereich des Filtergehäuses einen mit einem Ölsammelraum verbundenen Ableitungskanal ventilartig zu verschließen. Die zweite Funktion besteht darin, durch den Nebenstromfilterteil hindurchströmendes Öl in den durch die Mittelstange ventilartig verschlossenen Kanal durch diese Mittelstange hindurch während des Filterbetriebes einfließen zu lassen.

An dem Nebenstromfilterteil, das fest mit der Mittelstange verbunden ist, ist der Filtereinsatz des Hauptfilterteiles radial aufschiebbar befestigt. Derjenige Teil des Nebenstromfilter-Gehäuses, auf den der Hauptfiltereinsatz aufgeschoben wird, ist ein dicht in das Filtergehäuse eingesteckter Stutzen. Nachteilig an diesem Filter ist insbesondere, daß der Stutzen, auf dem der Filtereinsatz des Hauptfilters gelagert ist, in dem Gehäuse eine zusätzliche Dichtung benötigt. Des weiteren müssen die Flächen, an denen jener Stutzen in dem Gehäuse dicht anliegt, besonders mechanisch bearbeitet sein, was aufwendig ist. Abgesehen davon, daß die Erfindung kein kombiniertes Haupt- und Nebenstromfilter betrifft, ist auch die Lagerung des Filtereinsatzes bei der Erfindung konstruktiv wesentlich einfacher als diejenige des Hauptstromfiltereinsatzes bei jener vorbekannten Ausführung.

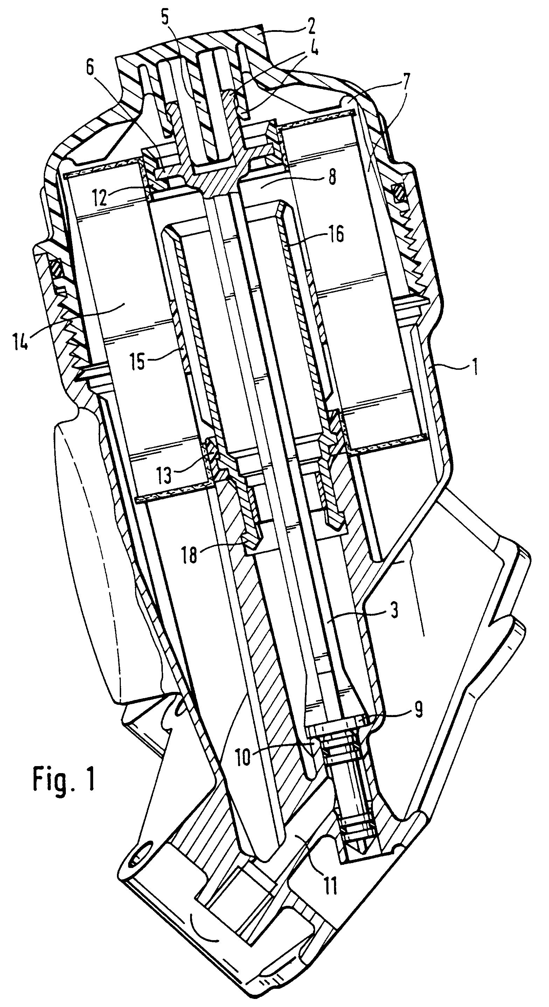

In der Zeichnung sind senkrechte Mittelschnitte zweier Ausführungsbeispiele für Ölfilter nach der Erfindung dargestellt, und zwar zeigt
- Fig. 1: eine Ausführung ohne Druckfeder zwischen Deckel und Mittelstange,
- Fig. 2: eine Ausführung mit Druckfeder zwischen Deckel und Mittelstange.

Auf ein Filtergehäuse 1 ist ein Deckel 2 aufgeschraubt und von diesen zwecks Wechsels eines Filtereinsatzes 14 abschraubbar. An der Unterseite des Deckels 2 ist mittels ineinander eingreifender Rastungen 4 eine Mittelstange 3 verdrehbar und begrenzt axial verschiebbar befestigt. Außerdem ist an der Unterseite des Deckels 2 zentral ein Hubbegrenzer 5 vorgesehen, der gegen eine Anlagefläche an der Mittelstange 3 weist, wodurch das axiale Spiel zwischen Deckel 2 und Mittelstange 3 begrenzt ist. In ihrem deckelnahen Bereich weist die Mittelstange 3 eine kolbenartige Verdickung 6 auf, die an ihrem Außenumfang eine Dichtung 12 aufweist, an der der Filtereinsatz 14 mit seinem oberen End-bereich dichtend anliegt. In dem Filtergehäuse 1 ist ein Zuströmraum 7 für verunreinigtes Öl außerhalb des Filtereinsatzes 14 gebildet, während sich ein Abströmraum 8 für gereinigtes Öl innerhalb des Filtereinsatzes 14 und in der Verlängerung dieses Raumes nach unten befindet. Je ein Öleinlaß und ein Ölauslaß - in der Zeichnung nicht dargestellt - sind im Filtergehäuse 1 vorgesehen. Innerhalb des Filtereinsatzes 14 ist ein sich vom unteren Teil des Filtergehäuses 1 nach oben erstreckender, zylindrischer Stutzkörper 16 vorgesehen, der durch eine Schnappverbindung 18 mit dem unteren Teil des Filtergehäuses 1 verbunden ist. Im unteren Bereich des Stützkörpers 16 ist an seinem Außenumfang eine Dichtung 13 vorgesehen, an der der untere Endbereich des Filtereinsatzes 14 dichtend anliegt. Am Innenumfang des Filtereinsatzes 14 befindet sich ein Stützring 15, der an dem Stützkörper 16 anliegt.

Im unteren Endbereich der Mittelstange 3 ist an dieser eine Anlagescheibe 9 vorgesehen, die mit einer Anlage 10 im Filtergehäuse 1 zusammenwirkt und damit ein ventilartig wirkendes Glied bildet, dessen Durchlaß bei Bewegung der Mittelstange 3 nach oben geöffnet wird, und zwar zu einem Ableitungskanal 11 hin, der zu einem Ölsammelraum - in der Zeichnung nicht dargestellt - führt.

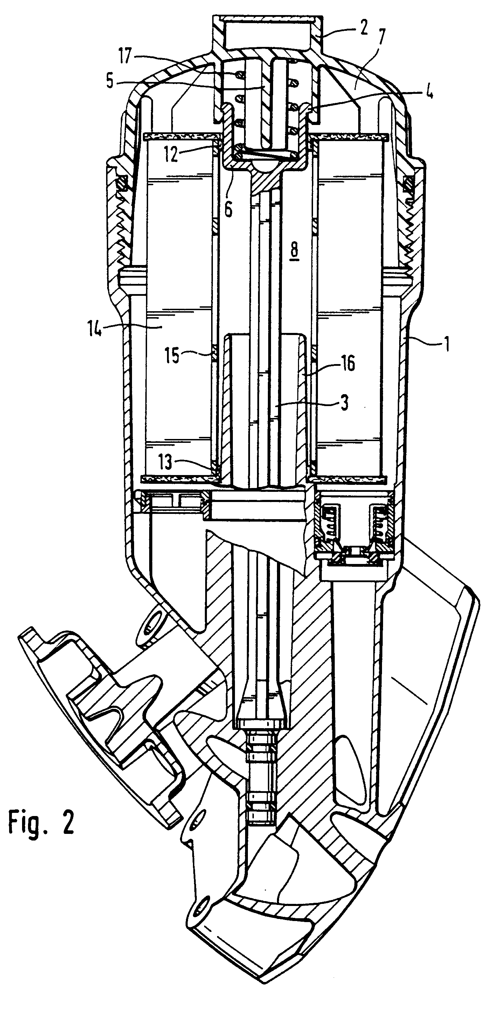

Die Dichtungen 12 und 13 köhnen alternativ - wie in Fig. 2 dargestellt - auch an dem Filtereinsatz 14 vorgesehen sein.

Bei dem Ausführungsbeispiel nach Fig. 2 ist in dem ringförmigen Raum zwischen den Rastungen 4 und dem Hubbegrenzer 5 zusätzlich eine Druckfeder 17 zwischen dem Deckel 2 und der kolbenartigen Verdickung 6 der Mittelstange 3 vorgesehen.

## Patentansprüche

1. Ölfilter für die Reinigung von Schmieröl, insbesondere für Verbrennungsmotoren von Kraftfahrzeugen, mit einem im Einbauzustand zumindest annähernd stehend angeordneten Filtergehäuse mit einem mit diesem verschraubbaren Deckel und einem mit letzterem lösbar verbindbaren, ringförmigen Filtereinsatz, der an dem dem Deckel gegenüberliegenden Ende radial innen in einem Schiebesitz auf einem fest mit dem Gehäuse verbundenen Stutzen dicht aufsitzt, wobei in dem Filtergehäuse ein
Öleinlaß für verunreinigtes Öl zu dem den Filtereinsatz umgebenden Zuströmraum und ein Ölauslaß für gereinigtes Öl aus dem von dem Innenraum des Filtereinsatzes gebildeten Abströmraum vorgesehen sind und wobei ferner im unteren Bereich des Filtergehäuses ein mit einem Ölsammelraum verbundener Ableitungskanal für bei einem Wechsel des Filtereinsatzes in dem Filtergehäuse verbliebenes Öl vorgesehen ist, der durch ein ventilartig wirkendes Glied bei jedem Wechsel des Filtereinsatzes selbsttätig geöffnet wird, im übrigen aber ständig abgeschlossen ist, dadurch gekennzeichnet, daß mit dem Deckel ( 2 ) eine Mittelstange ( 3 ) begrenzt axial verschiebbar verbunden ist, die in ihrem deckelnahen Bereich eine kolbenartige an dem Filtereinsatz (14) in einem Schiebesitz radial dicht anliegende Verdickung (6) aufweist, die den Zuströmraum (7) von dem Abströmraum (8) trennt, und die in ihrem unteren Endbereich das ventilartig wirkende Glied (9) aufweist, das mit dem Ableitungskanal (11) zusammenwirkt.

2. Ölfilter nach Anspruch 1, dadurch gekennzeichnet, daß der Deckel ( 2 ) gegenüber der Mittelstange ( 3 ) verdrehbar ist.

3. Ölfilter nach Anspruch 1 oder 2, dadurch gekennzeichnet, daß die begrenzte, axiale Verschiebbarkeit der Mittelstange ( 3 ) gegenüber dem Deckel ( 2 ) durch ineinander eingreifende Rastungen ( 4 ) in deisen beiden Teilen ( 2 , 3 ) und einen an einem dieser beiden Teile ( 2 , 3 ) vorgesehenen, gegen den anderen dieser beiden Teile ( 3 , 2 ) gerichteten Hubbegrenzer ( 5 ) verwirklicht ist.

4. Ölfilter nach einem der Ansprüche 1 bis 3,
dadurch gekennzeichnet, daß zwischen dem Deckel ( 2 ) und der Mittelstange ( 3 ) mindestens eine Druckfeder ( 17 ) vorgesehen ist.

5. Ölfilter nach Anspruch 4, dadurch gekennzeichnet, daß eine Druckfeder ( 17 ) koaxial zu der Mittelstange ( 3 ) im Bereich der Verdickung ( 6 ) den Hubbegrenzer ( 5 ) umschließend und von den Rastungen ( 4 ) umschlossen angeordnet ist.

6. Ölfilter nach einem der Ansprüche 1 bis 5, dadurch gekennzeichnet, daß der Filtereinsatz ( 14 ) an seinem Innenumfang mit einem Stützring ( 15 ) versehen ist. der sich an einem inneren, zylindrischen Stützkörper ( 16 ) abstützt, der im unteren Teil des Filtergehäuses ( 1 ) durch eine Schnappverbindung ( 18 ) befestigt ist.

7. Ölfilter nach einem der vorhergehenden Ansprüche, dadurch gekennzeichnet, daß das Filtergehäuse ( 1 ) als Aluminium-Gußteil, der Deckel ( 2 ) als Kunststoff-Spritzteil und die Mittelstange ( 3 ) mit Verdickung ( 6 ) und ventilartigem Glied ( 9 ) als Kunststoff-Formteil ausgebildet ist.

## Claims

1. Oil filter for the cleaning of lubricating oil, in particular for internal combustion engines of motor vehicles, with a filter housing with a cap connectable with the latter by screwing, said housing being arranged at least approximately upright in the installed condition, and with a ring-shaped filter insert detachably connectable with said cap, which filter insert, at the end disposed opposite the cap, is tightly seated radially on the inside in a sliding seat on a nipple rigidly joined with the housing, whereby in the filter housing, provision is made for an oil inlet for contaminated oil to the feed-to space surrounding the filter insert, and for an oil outlet for cleaned oil from the flow-off space formed by the interior space of the filter insert, and whereby, furthermore, provision is made in the lower zone of the filter housing for a discharge duct connected with an oil-collecting space for oil remaining in the filter housing when the filter insert is changed, said discharge duct being automatically opened by a valve-like acting member with each change of the filter insert, but is constantly closed off as for the rest, characterized in that a center bar (3) is connected with the cap (2) with limited axial displaceability, said bar, in its zone close to the cap, having a piston-like thickening (6) resting radially tightly against the falter insert (14) in a sliding seat, against which thickening the filter insert (14) rests radially tightly in a sliding seat, said thickening separating the flow-to space (7) from the flow-off space (8) and having in its lower end zone a valve-like acting member cooperating with the discharge duct (11).

2. Oil filter according to claim 1, characterized in that the cap (2) is turnable against the center bar (3).

3. Oil filter according to claim 1 or 2, characterized in that the limited axial displaceability of the center bar (3) against the cap (2) is realized by arrests (4) in said two parts (2, 3), said arrests engaging each other, and by a stroke limiter (5) provided on one of said two parts (2, 3), said limiter being directed against the other of said two parts (3, 2).

4. Oil filter according to any one of claims 1 to 3, characterized in that provision is made for at least one pressure spring (17) between the cap (2) and the center bar (3).

5. Oil filter according to claim 4, characterized in that a pressure spring (17) is arranged coaxially with the center bar (3) within the zone of the thickening (6), said pressure spring enclosing the stroke limiter (5) and being enclosed by the arrests (4).

6. Oil filter according to any one of claims 1 to 5, characterized in that on its inner circumference, the filter insert (14) is provided with a supporting ring (15) supporting itself on an inner cylindrical supporting body (16), the latter being fastened in the lower part of the filter housing (1) by a snap connection (18).

7. Oil filter according to any one of the preceding claims, characterized in that the filter housing (1) is designed as a cast aluminum part, the cap (2) as an injection-molded plastic part, and the center bar (3) with the thickening (6) and the valve-like member (9) as a molded plastic part.

## Revendications

1. Filtre à huile pour l'épuration d'huile de graissage, en particulier pour moteurs à combustion interne de véhicules automobiles, comportant un corps placé, à l'état monté, au moins approximativement verticalement, un couvercle vissable à celui-ci et un élément filtrant annulaire qui peut être joint avec possibilité de séparation au couvercle et, à son extrémité opposée au couvercle, s'appuie de manière étanche, à l'intérieur radialement, dans un ajustement glissant, sur une tubulure jointe rigidement au corps, dans le corps étant prévues une entrée d'huile polluée qui mène à l'espace d'arrivée entourant l'élément filtrant et une sortie d'huile épurée de l'espace de départ formé par l'intérieur de l'élément filtrant, et dans la partie inférieure du corps étant prévu un conduit d'évacuation communiquant avec un espace collecteur d'huile, pour de l'huile restée dans le corps lors du changement de l'élément filtrant, ouvert automatiquement par un organe agissant à la manière d'une soupape à chaque changement de l'élément filtrant, mais autrement constamment fermé, caractérisé par le fait qu'au couvercle (2) est jointe, avec possibilité de déplacement axial limité, une tige centrale (3) qui présente dans sa partie voisine du couvercle un épaississement du genre piston (6) appuyé radialement de manière étanche, dans un ajustement glissant, contre l'élément filtrant (14), qui sépare l'espace d'arrivée (7) de l'espace de départ (8), et qui présente dans sa partie extrême inférieure l'organe (9) agissant à la manière d'une soupape qui coopère avec le conduit d'évacuation (11).

2. Filtre à huile selon la revendication 1, caractérisé par le fait que le couvercle (2) peut tourner par rapport à la tige centrale (3).

3. Filtre à huile selon l'une des revendications 1 et 2, caractérisé par le fait que la possibilité de déplacement axial limité de la tige centrale (3) par rapport au couvercle (2) est réalisée par des éléments d'arrêt s'engageant l'un dans l'autre (4) prévus dans ces deux éléments (2, 3) et un limiteur de course (5) prévu sur un de ces deux éléments (2, 3) et dirigé vers l'autre de ces deux éléments (3, 2).

4. Filtre à huile selon l'une des revendications 1 à 3, caractérisé par le fait qu'entre le couvercle (2) et la tige centrale (3) est prévu au moins un ressort de compression (17).

5. Filtre à huile selon la revendication 4, caractérisé par le fait qu'un ressort de compression (17) est placé, coaxialement à la tige centrale (3), dans la zone de l'épaississement (6) de façon à entourer le limiteur de course (5) et être entouré par les éléments d'arrêt (4).

6. Filtre à huile selon l'une des revendications 1 à 5, caractérisé par le fait que l'élément filtrant (14) est pourvu sur son pourtour intérieur d'un anneau d'appui (15) qui s'appuie sur un corps d'appui cylindrique intérieur (16) qui est fixé dans la partie inférieure du corps (1) par un encliquetage (18).

7. Filtre à huile selon l'une des revendications précédentes, caractérisé par le fait que le corps (1) est une pièce coulée en aluminium, le couvercle (2) est une pièce injectée en matière plastique et la tige centrale (5) à épaississement (6) et organe du genre soupape (9) est une pièce moulée en matière plastique.
